# EUROPÄISCHE PATENTSCHRIFT

(11) **EP 3 167 641 B1**
(45) Veröffentlichungstag und Bekanntmachung des Hinweises auf die Patenterteilung: **01.05.2019**
(21) Anmeldenummer: 15756881.7
(22) Anmeldetag: 21.08.2015
(51) Int. Cl.: H04W 12/10, H04L 29/06, B61L 27/00

(54) **VERFAHREN UND VORRICHTUNG ZUR GESICHERTEN KOMMUNIKATION ZWISCHEN EINEM ERSTEN UND EINEM ZWEITEN TEILNEHMER**
METHOD AND DEVICE FOR THE SECURE COMMUNICATION BETWEEN A FIRST AND A SECOND PARTICIPANT
PROCÉDÉ ET DISPOSITIF DE COMMUNICATION SÉCURISÉ ENTRE UN PREMIER ABONNÉ ET UN SECOND ABONNÉ

(30) Priorität: 09.09.2014 DE 102014217973
(43) Veröffentlichungstag der Anmeldung: 17.05.2017
(73) Patentinhaber: Siemens Mobility GmbH, 81739 München (DE)
(72) Erfinder: KOHLRUSS, Jacob Johannes, 38116 Braunschweig (DE)
(86) Internationale Anmeldenummer: PCT/EP2015/069208
(87) Internationale Veröffentlichungsnummer: WO 2016/037829

(56) Entgegenhaltungen:
- WO-A1-2014/011887
- US-B1- 7 124 167
- LENNARTZ K: "SIGNALTECHNISCH SICHERE DATENUEBERTRAGUNG IM RAHMEN VON CIRNET", SIGNAL + DRAHT, TELZLAFF VERLAG GMBH. DARMSTADT, DE, Bd. 85, Nr. 4, 1. April 1993 (1993-04-01), Seiten 96-101, XP000380305, ISSN: 0037-4997

## Beschreibung

Die Erfindung betrifft ein Verfahren zur gesicherten Kommunikation zwischen einem ersten Teilnehmer und einem zweiten Teilnehmer, bei dem der erste Teilnehmer eine Sendeinformation in einem ersten vom zweiten Teilnehmer auswertbaren Informationsformat erzeugt, die Sendeinformation in ein zweites vom zweiten Teilnehmer auswertbares Informationsformat überführt wird und die Sendeinformation im zweiten Informationsformat an den zweiten Teilnehmer übermittelt wird.
Es gibt zahlreiche technische Gebiete, in denen eine Information, die ein Sender an einen Empfänger sendet, beim Empfänger aufgrund von Sicherheitsanforderungen unverfälscht, d.h. mit ihrem ursprünglichen Informationsgehalt, ankommen muss. In der Regel ist es in diesen Gebieten zudem erforderlich, dass der Empfänger den Informationsgehalt der Information korrekt ermittelt.

Unter anderem zählt das Schienenverkehrswesen zu diesen technischen Gebieten. So muss beispielsweise bei einer Übermittlung von Fahrbefehlen von einem Fahrdienstleiter an einen Triebfahrzeugführer sichergestellt werden muss, dass der Triebfahrzeugführer die Fahrbefehle unverfälscht empfängt und diese zudem richtig versteht.

Bisher bekannte Ansätze zum Sicherstellen, dass die vom Sender gesendete Information unverfälscht beim Empfänger ankommt und/oder der Empfänger den Informationsgehalt der Information korrekt ermittelt, sind mit einem großen Kosten-/Arbeitsaufwand verbunden.

Aus dem Artikel "Signaltechnisch sichere Datenübertragung im Rahmen von CIRnet" des Autors Karl Lennartz, SIGNAL + DRAHT, TELZLAFF VERLAG GMBH, DARMSTADT, DE, Bd. 85, Nr. 4, 1. April 1993, ist ein gattungsgemäßes Verfahren bekannt.

Außerdem ist aus der Druckschrift WO 2014/011667 A1 ein Verfahren zur Kommunikation zwischen einem Fahrzeug und einem Stellwerk bekannt.

Eine Aufgabe der Erfindung ist, ein Verfahren zur gesicherten Kommunikation zwischen einem ersten Teilnehmer und einem zweiten Teilnehmer anzugeben, welches aufwandsgünstig durchgeführt werden kann.

Diese Aufgabe wird erfindungsgemäß durch ein Verfahren mit den Merkmalen des Patentanspruches 1 gelöst.

Die Erfindung geht von der Überlegung aus, dass das Prüfen, ob der Informationsgehalt der Bestätigungsinformation eindeutig dem Informationsgehalt der Sendeinformation zugeordnet ist, es dem ersten Teilnehmer ermöglicht, festzustellen, ob der zweite Teilnehmer den Informationsgehalt der Sendeinformation korrekt ermittelt hat. Dieses Prüfen setzt voraus, dass zuvor der zweite Teilnehmer die Bestätigungsinformation erzeugt und die Bestätigungsinformation an den ersten Teilnehmer übermittelt wird.

Damit der zweite Teilnehmer den Informationsgehalt der Sendeinformation korrekt ermitteln kann, muss die Sendeinformation sinnvollerweise zuvor unverfälscht an den zweiten Teilnehmer übermittelt worden sein. Folglich wird dem ersten Teilnehmer durch das oben erwähnte Prüfen auch ermöglicht, festzustellen, ob die Sendeinformation unverfälscht an den zweiten Teilnehmer übermittelt wurde.

Falls der zweite Teilnehmer den Informationsgehalt der Sendeinformation inkorrekt ermittelt hat und/oder die Sendeinformation verfälscht an den zweiten Teilnehmer übermittelt wurde, kann der erste Teilnehmer dies z.B. dadurch feststellen, dass der Informationsgehalt der Bestätigungsinformation nicht eindeutig dem Informationsgehalt der Sendeinformation zugeordnet ist.

Grundsätzlich können die Sendeinformation und die Bestätigungsinformation bezüglich ihres Informationsgehalts bzw. eines Teils ihres Informationsgehalts verschieden sein. Es ist aber auch möglich, dass die Sendeinformation und die Bestätigungsinformation bezüglich ihres Informationsgehalts bzw. eines Teils ihres Informationsgehalts identisch sind.

Weiterhin können die Sendeinformation und die Bestätigungsinformation bezüglich ihres Informationsformats, insbesondere bezüglich ihrer Codierung und/oder einer Reihenfolge ihrer Informationsbestandteile, verschieden sein.

Das Prüfen, ob der Informationsgehalt der Bestätigungsinformation eindeutig dem Informationsgehalt der Sendeinformation zugeordnet ist, kann unter Verwendung einer vorgegebenen Zuordnungsvorschrift erfolgen. Dabei kann der erste Teilnehmer beispielsweise prüfen, ob der Informationsgehalt der Bestätigungsinformation ein dem Informationsgehalt der Sendeinformation gemäß dieser Zuordnungsvorschrift zugeordneter Informationsgehalt ist. Sinnvollerweise ermittelt der erste Teilnehmer zuvor den Informationsgehalt der Bestätigungsinformation.

Vorliegend kann eine Informationsübermittlung per Funk oder kabelgebunden erfolgen. Bei der Informationsübermittlung kann unter anderem ein Mobilfunknetzwerk, ein offenes Netzwerk, wie z.B. das Internet, und/oder eine Punkt-zu-Punkt-Verbindung zum Einsatz kommen.

Zur Informationsübermittlung ist es ausreichend, wenn ein Übertragungskanal verwendet wird. Jedoch können prinzipiell auch mehrere Übertragungskanäle zur Informationsübermittlung verwendet werden.

Der erste Teilnehmer erzeugt die Sendeinformation in einem ersten vom zweiten Teilnehmer auswertbaren Informationsformat. Die Sendeinformation wird in ein zweites vom zweiten Teilnehmer auswertbares Informationsformat überführt. Die beiden Informationsformate sind sinnvollerweise voneinander verschieden.

Als ein von einem Teilnehmer auswertbares Informationsformat einer Information kann ein solches Informationsformat aufgefasst werden, bei dem besagter Teilnehmer in der Lage ist, einen Informationsgehalt der Information zu ermitteln. Sinnvollerweise ist die Information dabei derart kodiert, dass die Information vom Teilnehmer dekodiert werden kann.

Ein Vorteil des Überführens der Sendeinformation aus dem ersten Informationsformat in das zweite Informationsformat ist, dass das zweite Informationsformat ein solches Informationsformat sein kann, in welchem der zweite Teilnehmer die Sendeinformation mit geringerem Aufwand auswerten kann als im ersten Informationsformat. Das erste Informationsformat hingegen kann ein solches Informationsformat sein, im welchem der erste Teilnehmer die Sendeinformation mit geringerem Aufwand erstellen kann als im zweiten Informationsformat.

Das Überführen der Sendeinformation in das zweite Informationsformat kann vom ersten oder vom zweiten Teilnehmer durchgeführt bzw. veranlasst werden. Falls der erste Teilnehmer die Sendeinformation in das zweite Informationsformat überführt bzw. das Überführen der Sendeinformation in das zweite Informationsformat veranlasst, kann das Überführen vor oder nach der Übermittlung der Sendeinformation an den zweiten Teilnehmer erfolgen.

Der zweite Teilnehmer ermittelt aus der im zweiten Informationsformat vorliegenden Sendeinformation ihren Informationsgehalt. Der zweite Teilnehmer erzeugt die Bestätigungsinformation unter Verwendung des ermittelten Informationsgehalts.

Der zweite Teilnehmer erzeugt die Bestätigungsinformation in einem ersten vom ersten Teilnehmer auswertbaren Informationsformat. Darüber hinaus wird die Bestätigungsinformation zweckmäßigerweise in ein zweites vom ersten Teilnehmer auswertbares Informationsformat überführt.

Der erste Teilnehmer prüft unter Verwendung der im letztgenannten Informationsformat vorliegenden Bestätigungsinformation, ob der Informationsgehalt der Bestätigungsinformation eindeutig dem Informationsgehalt der Sendeinformation zugeordnet ist.

Sinnvollerweise sind das erste vom ersten Teilnehmer auswertbare Informationsformat und das zweite vom ersten Teilnehmer auswertbare Informationsformat voneinander verschieden.

Ein Vorteil des Überführens der Bestätigungsinformation aus dem ersten vom ersten Teilnehmer auswertbaren Informationsformat in das zweite vom ersten Teilnehmer auswertbare Informationsformat ist, dass das zweite Informationsformat ein solches Informationsformat sein kann, in welchem der erste Teilnehmer die Bestätigungsinformation mit geringerem Aufwand auswerten kann als im ersten Informationsformat. Das erste Informationsformat hingegen kann ein solches Informationsformat sein, in welchem der zweiten Teilnehmer die Bestätigungsinformation mit geringerem Aufwand erstellen kann im zweiten Informationsformat.

Das Überführen der Bestätigungsinformation in das zweite vom ersten Teilnehmer auswertbare Informationsformat kann vom ersten oder vom zweiten Teilnehmer durchgeführt bzw. veranlasst werden. Falls der zweite Teilnehmer die Bestätigungsinformation in das zweite Informationsformat überführt bzw. das Überführen der Bestätigungsinformation in das zweite Informationsformat veranlasst, kann das Überführen vor oder nach der Übermittlung der Bestätigungsinformation an den ersten Teilnehmer erfolgen.

In den jeweiligen zuvor genannten Informationsformaten kann die Sendeinformation bzw. die Bestätigungsinformation in Form eines Textes, einer Tabelle, einer Grafik oder als Audiosignal vorliegen.

Das erste vom ersten Teilnehmer auswertbare Informationsformat kann identisch mit dem ersten vom zweiten Teilnehmer auswertbaren Informationsformat sein. Außerdem kann das zweite vom ersten Teilnehmer auswertbares Informationsformat identisch mit dem zweiten vom zweiten Teilnehmer auswertbaren Informationsformat sein.

Die Sendeinformation umfasst eine Anweisung. Die Sendeinformation kann zusätzlich auch noch einen Hinweis umfassen.

Zweckmäßigerweise erzeugt der erste Teilnehmer eine Freigabeinformation, falls der Informationsgehalt der Bestätigungsinformation eindeutig dem Informationsgehalt der Sendeinformation zugeordnet ist. Weiter ist es zweckmäßig, dass die gegebenenfalls erzeugte Freigabeinformation an den zweiten Teilnehmer übermittelt wird.

Die Freigabeinformation umfasst unter anderem eine Freigabe/Berechtigung, die in der Sendeinformation enthaltene Anweisung auszuführen. Sinnvollerweise führt der zweite Teilnehmer diese Anweisung nur bei/nach Erhalt der Freigabeinformation aus bzw. leitet diese Anweisung nur bei/nach Erhalt der Freigabeinformation weiter.

Der zweite Teilnehmer prüft die Anweisung auf Plausibilität/Ausführbarkeit. Der zweite Teilnehmer erzeugt die Bestätigungsinformation nur dann, wenn die Anweisung plausibel/ausführbar ist. Dadurch kann erreicht werden, dass der erste Teilnehmer bei Erhalt der Bestätigungsinformation schließen kann, dass die Anweisung plausibel/ausführbar ist.

Vorzugsweise wählt der erste Teilnehmer zum Erzeugen der Sendeinformation aus einer ersten Listenstruktur einen Informationswert als Informationsbestandteil der Sendeinformation. In bevorzugter Weise wählt der zweite Teilnehmer zum Erzeugen der Bestätigungsinformation aus einer zweiten Listenstruktur einen Informationswert als Informationsbestandteil der Bestätigungsinformation.

Die erste/zweite Listenstruktur kann mehrere vorgegebene Informationswerte umfassen. Weiterhin kann die erste/zweite Listenstruktur mehrere Listen umfassen, in welchen die Informationswerte gegliedert sind. Ferner können die erste und die zweite Listenstruktur identische oder unterschiedliche Informationswerte umfassen.

In einer vorteilhaften Ausführung der Erfindung umfasst die Sendeinformation einen Informationswert bezüglich eines vorgesehenen Empfängers. Des Weiteren ist es vorteilhaft, wenn der zweite Teilnehmer einen Fehlerhinweis in die Bestätigungsinformation aufnimmt, falls der zweite Teilnehmer, an den die Bestätigungsinformation übermittelt wird, vom vorgesehenen Empfänger verschieden ist. Auf diese Weise kann der erste Teilnehmer darüber informiert werden, dass Sendeinformation nicht an den vorgesehen Empfänger übermittelt wurde.

Der erste Teilnehmer kann eine Person sein. Bei der Person kann es sich beispielsweise um einen Fahrdienstleiter oder einen Triebfahrzeugführer handeln.

Vorzugsweise gibt die Person die Sendeinformation in ein Kommunikationsgerät ein. Das Eingeben der Sendeinformation in das Kommunikationsgerät kann dabei ein Eintippen und/oder Einsprechen der Sendeinformation in das Kommunikationsgerät umfassen. Zudem kann die Person die Sendeinformation unter Verwendung einer vorgegebenen Eingabestruktur, wie z.B. einer Dropdown-Liste bzw. einer Einheit aus mehreren Dropdown-Listen, in das Kommunikationsgerät eingeben.

Es ist zweckmäßig, wenn die Person die Sendeinformation mithilfe des Kommunikationsgeräts an den zweiten Teilnehmer übermittelt und/oder die Bestätigungsinformation mithilfe des Kommunikationsgeräts empfängt.

Außerdem ist es zweckmäßig, wenn die Person die zuvor erwähnte Freigabeinformation in das Kommunikationsgerät eingibt und/oder die Freigabeinformation mittels des Kommunikationsgeräts an den zweiten Teilnehmer übermittelt. Des Weiteren kann die zuvor erwähnte erste Listenstruktur, aus welcher der erste Teilnehmer den Informationswert für die Sendeinformation wählen kann, im Kommunikationsgerät hinterlegt sein.

In bevorzugter Weise wird die Sendeinformation mithilfe des Kommunikationsgeräts aus dem ersten vom zweiten Teilnehmer auswertbaren Informationsformat in das zweite vom zweiten Teilnehmer auswertbare Informationsformat überführt.

Alternativ kann der erste Teilnehmer eine Kommunikationsvorrichtung sein. In diesem Fall kann die erste Listenstruktur, aus welcher der erste Teilnehmer den Informationswert für die Sendeinformation wählen kann, in der Kommunikationsvorrichtung hinterlegt sein. Die Kommunikationsvorrichtung kann unter anderem ein Element eines Steuersystems eines Stellwerks sein bzw. mit einem solchen Steuersystem kommunikativ verbunden sein. Weiter kann die Kommunikationsvorrichtung ein Element eines Steuergeräts eines Schienenfahrzeugs sein bzw. mit einem solchen Steuergerät kommunikativ verbunden sein.

Der zweite Teilnehmer kann eine andere Person sein. Bei dieser Person kann es sich beispielsweise um einen Fahrdienstleiter oder einen Triebfahrzeugführer handeln.

Bevorzugterweise gibt die andere Person die Bestätigungsinformation in ein anderes Kommunikationsgerät ein. Insbesondere kann die andere Person die Bestätigungsinformation in das andere Kommunikationsgerät eintippen und/oder einsprechen. Weiterhin können das andere Kommunikationsgerät und das erstgenannte Kommunikationsgerät identisch ausgestaltet sein. Ferner kann die andere Person die Bestätigungsinformation unter Verwendung einer vorgegebenen Eingabestruktur, wie z.B. einer Dropdown-Liste bzw. einer Einheit aus mehreren Dropdown-Listen, in das andere Kommunikationsgerät eingeben.

Es ist zweckmäßig, wenn die andere Person die Bestätigungsinformation mithilfe des anderen Kommunikationsgeräts an den ersten Teilnehmer übermittelt und/oder die Sendeinformation mithilfe des anderen Kommunikationsgeräts empfängt.

Ferner ist es zweckmäßig, wenn die andere Person die zuvor erwähnte Freigabeinformation mittels des anderen Kommunikationsgeräts empfängt. Des Weiteren kann die zuvor erwähnte zweite Listenstruktur, aus welcher der zweite Teilnehmer den Informationswert für die Bestätigungsinformation wählen kann, im anderen Kommunikationsgerät hinterlegt sein.

In bevorzugter Weise wird die Bestätigungsinformation aus dem ersten vom ersten Teilnehmer auswertbaren Informationsformat mithilfe des anderen Kommunikationsgeräts in das zweite vom ersten Teilnehmer auswertbare Informationsformat überführt.

Alternativ kann der zweite Teilnehmer eine andere Kommunikationsvorrichtung sein. In diesem Fall kann die zweite Listenstruktur, aus welcher der zweite Teilnehmer den Informationswert für die Bestätigungsinformation wählen kann, in der anderen Kommunikationsvorrichtung hinterlegt sein. Die andere Kommunikationsvorrichtung kann unter anderem ein Element eines Steuersystems eines Stellwerks sein bzw. mit einem solchen Steuersystem kommunikativ verbunden sein. Weiter kann die andere Kommunikationsvorrichtung ein Element eines Steuergeräts eines Schienenfahrzeugs sein bzw. mit einem solchen Steuergerät kommunikativ verbunden sein.

Die andere Kommunikationsvorrichtung kann dazu eingerichtet sein, eine vom Informationsgehalt der Sendeinformation abhängige Operation auszuführen, insbesondere eine in der Sendeinformation enthaltene Anweisung auszuführen. Weiterhin kann die andere Kommunikationsvorrichtung dazu eingerichtet sein, die Sendeinformation an eine weitere Vorrichtung weiterzuleiten, welche insbesondere zur Ausführung einer vom Informationsgehalt der Sendeinformation abhängigen Operation vorbereitet sein kann.

Grundsätzlich ist es möglich, dass beide Teilnehmer Personen sind, beide Teilnehmer Kommunikationsvorrichtungen sind oder einer der beiden Teilnehmer eine Person ist, während der andere der beiden Teilnehmer eine Kommunikationsvorrichtung ist.

Zweckmäßigerweise wird die Sendeinformation visuell/akustisch ausgegeben, insbesondere von einer Ausgabeeinheit. Darüber hinaus ist es zweckmäßig, wenn die Bestätigungsinformation visuell/akustisch ausgegeben wird, insbesondere von einer anderen Ausgabeeinheit und/oder der zuvor genannten Ausgabeeinheit. Eine visuelle Ausgabe der Sendeinformation bzw. der Bestätigungsinformation kann beispielsweise in Textform oder in Tabellenform erfolgen.

Die erstgenannte Ausgabeeinheit kann ein Bestandteil des zuvor erwähnten Kommunikationsgeräts sein oder mit dem Kommunikationsgerät kommunikativ verbunden sein. In analoger Weise kann die andere Ausgabeeinheit ein Bestandteil des oben erwähnten anderen Kommunikationsgeräts sein oder mit diesem Kommunikationsgerät kommunikativ verbunden sein.

Die Erfindung betrifft außerdem ein System zur gesicherten Kommunikation, aufweisend einen ersten als Kommunikationsvorrichtung ausgestalteten Teilnehmer und einen zweiten als Kommunikationsvorrichtung ausgestalteten Teilnehmer, wobei der erste Teilnehmer dazu eingerichtet ist, eine Sendeinformation in einem ersten vom zweiten Teilnehmer auswertbaren Informationsformat zu erzeugen, die Sendeinformation in ein zweites vom zweiten Teilnehmer auswertbares Informationsformat zu überführen sowie die Sendeinformation an den zweiten Teilnehmer zu übermitteln.

Eine weitere Aufgabe der Erfindung ist, ein System anzugeben, mit dem sich ein Verfahren zur gesicherten Kommunikation, insbesondere das oben beschriebene Verfahren, durchführen lässt.

Diese Aufgabe wird erfindungsgemäß durch ein System mit den Merkmalen des Patentanspruches 7 gelöst.

Der erste/zweite Teilnehmer kann unter anderem ein Element eines Steuersystems eines Stellwerks sein bzw. mit einem solchen Steuersystem kommunikativ verbunden sein. Weiter kann erste/zweite Teilnehmer ein Element eines Steuergeräts eines Schienenfahrzeugs sein bzw. mit einem solchen Steuergerät kommunikativ verbunden sein.

Der erste Teilnehmer ist dazu eingerichtet, die Sendeinformation in einem ersten vom zweiten Teilnehmer auswertbaren Informationsformat zu erzeugen. Ferner ist der erste Teilnehmer dazu eingerichtet, die Sendeinformation in ein zweites vom zweiten Teilnehmer auswertbares Informationsformat zu überführen. Der zweite Teilnehmer ist dazu eingerichtet, aus der im zweiten Informationsformat vorliegenden Sendeinformation ihren Informationsgehalt zu ermitteln. Des Weiteren ist der zweite Teilnehmer dazu eingerichtet, die Bestätigungsinformation unter Verwendung des ermittelten Informationsgehalts zu erzeugen.

Weiterhin ist der zweite Teilnehmer dazu eingerichtet sein, die Bestätigungsinformation in einem ersten vom ersten Teilnehmer auswertbaren Informationsformat zu erzeugen. Der zweite Teilnehmer ist dazu eingerichtet, die Bestätigungsinformation in ein zweites vom ersten Teilnehmer auswertbares Informationsformat zu überführen. Darüber hinaus ist der erste Teilnehmer dazu eingerichtet, unter Verwendung der im letztgenannten Informationsformat vorliegenden Bestätigungsinformation zu prüfen, ob der Informationsgehalt der Bestätigungsinformation eindeutig dem Informationsgehalt der Sendeinformation zugeordnet ist.

Zweckmäßigerweise ist der erste Teilnehmer dazu eingerichtet, eine Freigabeinformation zu erzeugen, falls der Informationsgehalt der Bestätigungsinformation eindeutig dem Informationsgehalt der Sendeinformation zugeordnet ist. Zudem ist der erste Teilnehmer dazu eingerichtet, die gegebenenfalls erzeugte Freigabeinformation an den zweiten Teilnehmer zu übermitteln.

Die Sendeinformation umfasst eine Anweisung. Zweckmäßigerweise ist der zweite Teilnehmer dazu eingerichtet, die Anweisung auf Plausibilität/Ausführbarkeit zu prüfen. Des Weiteren ist der zweite Teilnehmer dazu eingerichtet, die Bestätigungsinformation nur dann zu erzeugen, wenn die Anweisung plausibel/ausführbar ist.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren und dem erfindungsgemäßen System kombinierbar. So sind Verfahrensmerkmale, gegenständlich formuliert, auch als Eigenschaft der entsprechenden Vorrichtungseinheit zu sehen und umgekehrt.

Auch wenn in der Beschreibung und/oder in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Stellwerk, welches ein Steuersystem mit einer ersten Kommunikationsvorrichtung aufweist, und ein Schienenfahrzeug, welches ein Steuergerät mit einer zweiten Kommunikationsvorrichtung aufweist;
- FIG 2: das Steuersystem des Stellwerks und das Steuergerät des Schienenfahrzeugs aus FIG 1;
- FIG 3: ein weiteres Stellwerk, in welchem sich eine erste mit einem Kommunikationsgerät ausgerüstete Person befindet, und ein weiteres Schienenfahrzeug, in welchem sich eine zweite mit einem anderen Kommunikationsgerät ausgerüstete Person befindet; und
- FIG 4: die beiden Kommunikationsgeräte aus FIG 3.

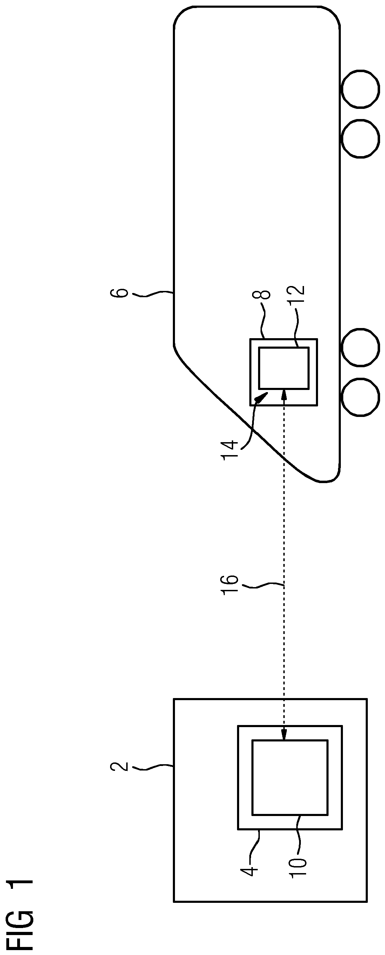

FIG 1 zeigt schematisch ein Stellwerk 2, welches ein Steuersystem 4 aufweist, sowie ein Schienenfahrzeug 6, welches ein Steuergerät 8, insbesondere ein Zugsteuergerät, aufweist.

Des Weiteren zeigt FIG 1 einen ersten Teilnehmer 10 eines Verfahrens zur gesicherten Kommunikation und einen zweiten Teilnehmer 12 des Verfahrens zur gesicherten Kommunikation.

Beim ersten Teilnehmer 10 handelt es sich um eine erste Kommunikationsvorrichtung, welche ein Bestandteil des Steuersystems 4 des Stellwerks 2 ist, und beim zweiten Teilnehmer 12 handelt es sich um eine zweite Kommunikationsvorrichtung, die ein Bestandteil des Steuergeräts 8 des Schienenfahrzeugs 6 ist.

Zudem sind die beiden Teilnehmer 10, 12 Bestandteile eines Systems 14 zur gesicherten Kommunikation. Weiterhin sind die beiden Teilnehmer 10, 12 über eine Funkverbindung 16 kommunikativ miteinander verbunden.

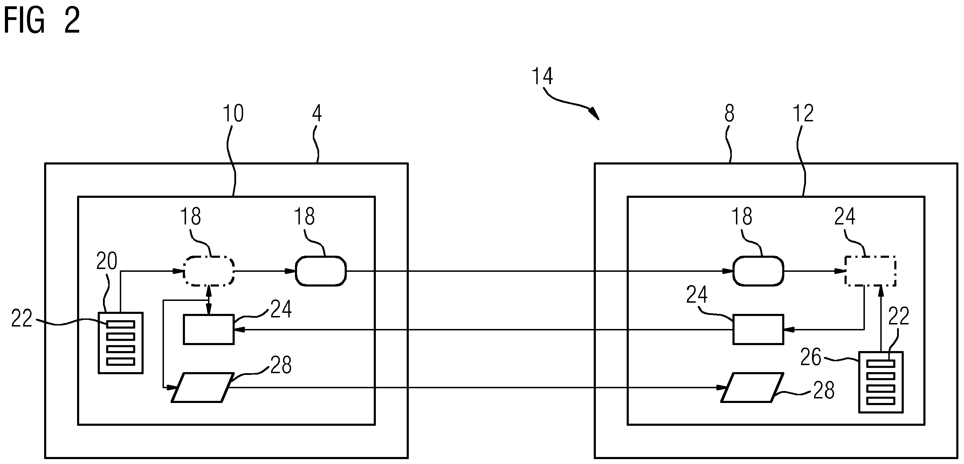

FIG 2 zeigt das Steuersystem 4 mit dem ersten Teilnehmer 10 sowie das Steuergerät 8 mit dem zweiten Teilnehmer 12 aus FIG 1.

Der erste Teilnehmer 10 erzeugt eine Sendeinformation 18 in einem ersten vom zweiten Teilnehmer 12 auswertbaren Informationsformat, wobei die Sendeinformation 18 einen Informationsgehalt aufweist. Insbesondere umfasst die Sendeinformation 18 eine Anweisung, wie z.B. einen Steuerbefehl an das Steuergerät 8.

Zum Erzeugen der Sendinformation 18 verwendet der erste Teilnehmer 10 eine erste Listenstruktur 20 mit mehreren Listen 22, die jeweils mehrere vorgegebene Informationswerte umfassen. Des Weiteren setzt der erste Teilnehmer 10 die Sendeinformation 18 aus mehreren Informationsbestandteilen zusammen. Für jeden dieser Informationsbestandteile ist eine der zuvor genannten Listen 22 vorgesehen, wobei der erste Teilnehmer 10 zum Erzeugen der Sendinformation 18 einen der mehreren Informationswerte aus der für den jeweiligen Informationsbestandteil vorgesehen Liste 22 wählt.

Außerdem speichert der erste Teilnehmer 10 die Sendeinformation 18 in einem Datenspeicher. Dieser Datenspeicher ist in FIG 2 der Übersichtlichkeit halber nicht dargestellt.

Unter Verwendung eines Konvertierungsalgorithmus überführt der erste Teilnehmer 10 die Sendeinformation 18 aus dem ersten vom zweiten Teilnehmer 12 auswertbaren Informationsformat in ein zweites vom zweiten Teilnehmer 12 auswertbares Informationsformat, wobei die beiden Informationsformate voneinander verschieden sind.

Weiterhin übermittelt der erste Teilnehmer 10 die im zweiten Informationsformat vorliegende Sendeinformation 18 per Funk an den zweiten Teilnehmer 12.

Der zweite Teilnehmer 12 ermittelt aus der im zweiten Informationsformat vorliegenden Sendeinformation 18 ihren Informationsgehalt. Insbesondere ermittelt der zweite Teilnehmer 12 die in der Sendeinformation 18 enthaltene Anweisung.

Ferner prüft der zweite Teilnehmer 12 die Anweisung auf Plausibilität/Ausführbarkeit. Falls die Anweisung plausibel/ausführbar ist, erzeugt der zweite Teilnehmer 12 unter Verwendung des ermittelten Informationsgehalts der Sendeinformation 18 eine Bestätigungsinformation 24 in einem ersten vom ersten Teilnehmer 12 auswertbaren Informationsformat. Dabei ordnet der zweite Teilnehmer 12 dem ermittelten Informationsgehalt der Sendeinformation 18 gemäß einer vorgegebenen Zuordnungsvorschrift einen Informationsgehalt zu, den der zweite Teilnehmer 12 als Informationsgehalt der Bestätigungsinformation 24 verwendet.

Zum Erzeugen der Bestätigungsinformation 24 verwendet der zweite Teilnehmer 12 eine zweite Listenstruktur 26 mit mehreren Listen 22, die jeweils mehrere vorgegebene Informationswerte umfassen. Der zweite Teilnehmer 12 setzt die Bestätigungsinformation 18 aus mehreren Informationsbestandteilen zusammen - analog zum Vorgehen beim Erstellen der Sendeinformation 18 seitens des ersten Teilnehmers 10.

Außerdem überführt der zweite Teilnehmer 12 die Bestätigungsinformation 24 unter Verwendung eines Konvertierungsalgorithmus aus dem ersten vom ersten Teilnehmer 10 auswertbaren Informationsformat in ein zweites vom ersten Teilnehmer 10 auswertbares Informationsformat, wobei auch diese beiden Informationsformate voneinander verschieden sind.

Zudem übermittelt der zweite Teilnehmer 12 die im letztgenannten Informationsformat vorliegende Bestätigungsinformation 24 per Funk an den ersten Teilnehmer 10.

Der erste Teilnehmer 10 prüft mithilfe eines Prüfalgorithmus, ob der Informationsgehalt der übermittelten Bestätigungsinformation 24 gemäß der vorgegebenen Zuordnungsvorschrift eindeutig dem Informationsgehalt der gespeicherten Sendeinformation 18 zugeordnet ist.

Falls der Informationsgehalt der übermittelten Bestätigungsinformation 24 eindeutig dem Informationsgehalt der gespeicherten Sendeinformation 18 zugeordnet ist, erzeugt der erste Teilnehmer 10 eine Freigabeinformation 28 und übermittelt diese per Funk an den zweiten Teilnehmer 12. Die Freigabeinformation 28 umfasst eine Freigabe/Berechtigung, die in der Sendeinformation 18 enthaltene Anweisung auszuführen.

Falls der Informationsgehalt der übermittelten Bestätigungsinformation 24 nicht eindeutig dem Informationsgehalt der gespeicherten Sendeinformation 18 zugeordnet ist, z.B. weil die Sendeinformation 18 bei der Übermittlung an den zweiten Teilnehmer 12 verfälscht wurde, erzeugt der erste Teilnehmer 10 keine Freigabeinformation und folglich erhält das Steuergerät 8 keine Freigabe, die in der Sendeinformation 18 enthaltene Anweisung auszuführen.

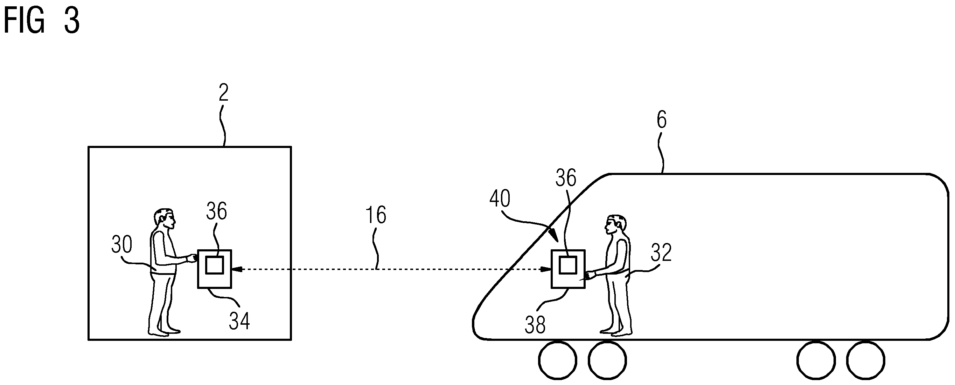

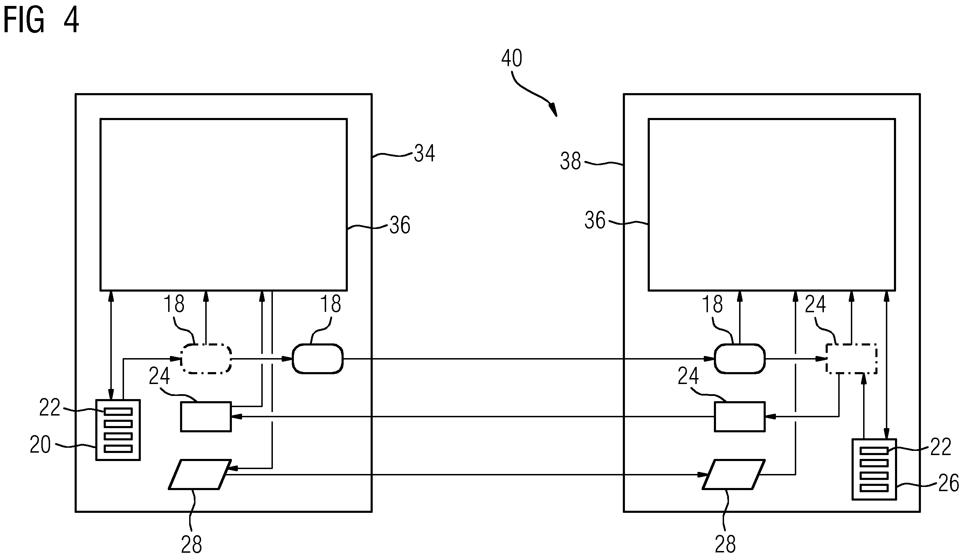

Werden in FIG 3 bzw. FIG 4 die gleichen Bezugszeichen verwendet wie in FIG 1 bzw. FIG 2, so bezeichnen diese Bezugszeichen jeweils im Wesentlichen gleiche bzw. einander entsprechende Elemente. Im Wesentlichen gleiche bzw. einander entsprechende Elemente können jedoch auch mit unterschiedlichen Bezugszeichen bezeichnet sein, falls dies zweckmäßig ist.

FIG 3 zeigt schematisch ein weiteres Stellwerk 2 und ein weiteres Schienenfahrzeug 6.

In dem Stellwerk 2 befindet sich ein erster Teilnehmer 30 eines Verfahrens zur gesicherten Kommunikation, während sich in dem Schienenfahrzeug 6 ein zweiter Teilnehmer 32 des Verfahrens zur gesicherten Kommunikation befindet.

Beide Teilnehmer 30, 32 sind Personen. Beim ersten Teilnehmer 30 handelt es sich um einen Fahrdienstleiter und beim zweiten Teilnehmer 32 handelt es sich um einen Triebfahrzeugführer.

Der erste Teilnehmer 30 ist mit einem ersten Kommunikationsgerät 34 mit einer Ein-/Ausgabeeinheit 36 ausgerüstet und der zweite Teilnehmer 32 ist mit einem zweiten Kommunikationsgerät 38 mit einer Ein-/Ausgabeeinheit 36 ausgerüstet, wobei die beiden Kommunikationsgeräte 34, 38 identisch zueinander ausgestaltet sind. Bei den beiden Ein-/Ausgabeeinheiten 36 handelt es sich im vorliegenden Ausführungsbeispiel um Touch-Displays.

Zudem sind die beiden Kommunikationsgeräte 34, 38 Bestandteile eines weiteren Systems 40 zu gesicherten Kommunikation, wobei die beiden Kommunikationsgeräte 34, 38 über eine Funkverbindung 16 kommunikativ miteinander verbunden.

FIG 4 zeigt das erste Kommunikationsgerät 34 und das zweite Kommunikationsgerät 38 aus FIG 3.

Der erste Teilnehmer 30 sowie der zweite Teilnehmer 32 aus FIG 3 sind der Übersichtlichkeit halber in FIG 4 nicht dargestellt.

Der erste Teilnehmer 30 erzeugt mithilfe des ersten Kommunikationsgeräts 34 eine Sendeinformation 18, die er in das ersten Kommunikationsgeräts 34 eingibt. Zu diesem Zweck wird dem ersten Teilnehmer 30 mittels der Ein-/Ausgabeeinheit 36 des ersten Kommunikationsgeräts 34 eine in diesem Kommunikationsgerät 34 hinterlegte Listenstruktur 20 angezeigt, die mehrere Listen 22, insbesondere Dropdown-Listen, mit jeweils mehreren vorgegebenen Informationswerten umfasst.

Zum Erzeugen der Sendeinformation 18 wählt der erste Teilnehmer 30 durch Tippen auf die Ein-/Ausgabeeinheit 36 aus jeder dieser Listen 22 jeweils einen der mehreren Informationswerte und setzt auf diese Weise die Sendeinformation 18 aus mehreren Informationsbestandteilen zusammen. Dabei erzeugt der erste Teilnehmer 30 die Sendeinformation 18 in einem ersten vom zweiten Teilnehmer 32 auswertbaren Informationsformat.

Die vom ersten Teilnehmer erzeugte Sendeinformation 18 weist einem Informationsgehalt auf. Insbesondere umfasst die Sendeinformation 18 eine Anweisung, z.B. einen Fahrbefehl, für den zweiten Teilnehmer 32. Weiterhin umfasst die Sendeinformation 18 einen Informationswert bezüglich eines vorgesehenen Empfängers.

Außerdem wird dem ersten Teilnehmer 30 die Sendeinformation 18 mittels der Ein-/Ausgabeeinheit 36 des ersten Kommunikationsgeräts 34 angezeigt.

Mittels des ersten Kommunikationsgeräts 34 überführt der erste Teilnehmer 30 die Sendeinformation 18 in ein zweites vom zweiten Teilnehmer 32 auswertbares Informationsformat. Im vorliegenden Ausführungsbeispiel ist das erste Informationsformat ein Tabellenformat und das zweite Informationsformat ein Textformat.

Des Weiteren übermittelt der erste Teilnehmer 30 die im zweiten Informationsformat vorliegende Sendeinformation 18 mittels des ersten Kommunikationsgeräts 34 per Funk an den zweiten Teilnehmer 32, der die Sendeinformation 18 mittels des zweiten Kommunikationsgeräts 38 empfängt.

Dem zweiten Teilnehmer 32 wird die übermittelte Sendeinformation 18 mittels der Ein-/Ausgabeeinheit 36 zweiten Kommunikationsgeräts 38 angezeigt.

Weiterhin ermittelt der zweite Teilnehmer 32 aus der im zweiten Informationsformat vorliegenden Sendeinformation 18 ihren den Informationsgehalt. Insbesondere ermittelt der zweite Teilnehmer 32 die in der Sendeinformation 18 enthaltene Anweisung.

Der zweite Teilnehmer 32 prüft anhand des in der Sendeinformation 18 enthaltenen Informationswerts bezüglich des vorgesehenen Empfängers, ob er der vorgesehene Empfänger ist.

Ferner prüft der zweite Teilnehmer 32 die Anweisung auf Plausibilität/Ausführbarkeit. Falls die Anweisung plausibel/ausführbar ist und der zweite Teilnehmer 32 der vorgesehene Empfänger ist, erzeugt der zweite Teilnehmer 32 unter Verwendung des ermittelten Informationsgehalts mithilfe des zweiten Kommunikationsgeräts 38 eine Bestätigungsinformation 24, die er in das Kommunikationsgerät 38 eingibt. Zu diesem Zweck ordnet der zweite Teilnehmer 32 dem ermittelten Informationsgehalt der Sendeinformation 18 gemäß einer vorgegebenen Zuordnungsvorschrift einen Informationsgehalt zu, insbesondere den gleichen Informationsgehalt, den die Sendeinformation 18 aufweist. Diesen zugeordneten Informationsgehalt verwendet der zweite Teilnehmer 32 als Informationsgehalt der Bestätigungsinformation 24.

Dem zweiten Teilnehmer 32 wird mittels der Ein-/Ausgabeeinheit 36 des zweiten Kommunikationsgeräts 38 eine in diesem Kommunikationsgerät 38 hinterlegte Listenstruktur 26 angezeigt, die mehrere Listen 22, insbesondere Dropdown-Listen, mit jeweils mehreren vorgegebenen Informationswerten umfasst.

Zum Erzeugen der Bestätigungsinformation 24 wählt der zweite Teilnehmer 32 durch Tippen auf die letztgenannte Ein-/Ausgabeeinheit 36 aus jeder der Listen 22 jeweils einen der mehreren Informationswerte und setzt auf diese Weise die Bestätigungsinformation 24 aus mehreren Informationsbestandteilen zusammen. Des Weiteren erzeugt der zweite Teilnehmer 32 die Bestätigungsinformation 24 in einem ersten vom ersten Teilnehmer 30 auswertbaren Informationsformat, welches mit dem ersten vom zweiten Teilnehmer 32 auswertbaren Informationsformat identisch ist, d.h. ein Tabellenformat ist.

Falls der zweite Teilnehmer 32 vom vorgesehenen Empfänger verschieden ist - z.B. da die Sendeinformation 18 irrtümlich an den zweiten Teilnehmer 32 übermittelt wurde - nimmt der zweite Teilnehmer 32 anstelle des zuvor genannten Informationsgehalts einen Fehlerhinweis in die Bestätigungsinformation 24 auf, welchen er in das zweite Kommunikationsgerät 38 eingibt.

Ferner wird dem zweiten Teilnehmer 32 die Bestätigungsinformation 24 mittels der Ein-/Ausgabeeinheit 36 des zweiten Kommunikationsgeräts 38 angezeigt.

Mittels des zweiten Kommunikationsgeräts 38 überführt der zweite Teilnehmer 32 die Bestätigungsinformation 24 in ein zweites vom ersten Teilnehmer 30 auswertbares Informationsformat, welches mit dem zweiten vom zweiten Teilnehmer 32 auswertbaren Informationsformat identisch ist, d.h. ein Textformat ist.

Zudem übermittelt der zweite Teilnehmer 32 die im letztgenannten Informationsformat vorliegende Bestätigungsinformation 24 mithilfe des zweiten Kommunikationsgeräts 38 per Funk an den ersten Teilnehmer 30, der Bestätigungsinformation 24 mithilfe des ersten Kommunikationsgeräts 34 empfängt.

Dem ersten Teilnehmer 30 wird die übermittelte Bestätigungsinformation 24 mittels der Ein-/Ausgabeeinheit 36 ersten Kommunikationsgeräts 34 angezeigt.

Der erste Teilnehmer 30 prüft, ob der Informationsgehalt der übermittelten Bestätigungsinformation 24 gemäß der vorgegebenen Zuordnungsvorschrift, die dem ersten Teilnehmer 30 bekannt ist, eindeutig dem Informationsgehalt der von ihm versandten Sendeinformation 18 zugeordnet ist.

Falls der Informationsgehalt der übermittelten Bestätigungsinformation 24 eindeutig dem Informationsgehalt der gespeicherten Sendeinformation 18 zugeordnet ist, erzeugt der erste Teilnehmer eine Freigabeinformation 28, die er in die Ein-/Ausgabeeinheit 36 des erste Kommunikationsgeräts 34 eingibt.

Ferner übermittelt der erste Teilnehmer 30 die Freigabeinformation 28 mittels des ersten Kommunikationsgeräts 34 per Funk an den zweiten Teilnehmer 32, der die Freigabeinformation 28 mithilfe des zweiten Kommunikationsgeräts 38 empfängt. Die Freigabeinformation 28 umfasst eine Freigabe/Berechtigung, die in der Sendeinformation 18 enthaltene Anweisung auszuführen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zur gesicherten Kommunikation zwischen einem ersten Teilnehmer (10; 30) und einem zweiten Teilnehmer (12; 32),
- bei dem der erste Teilnehmer (10; 30) eine Sendeinformation (18) in einem ersten vom zweiten Teilnehmer (12; 32) auswertbaren Informationsformat erzeugt,
- die Sendeinformation (18) in ein zweites vom zweiten Teilnehmer (12; 32) auswertbares Informationsformat überführt wird und
- die Sendeinformation (18) im zweiten Informationsformat an den zweiten Teilnehmer (12; 32) übermittelt wird,
wobei
- der zweite Teilnehmer (12; 32) aus der im zweiten Informationsformat vorliegenden Sendeinformation (18) einen Informationsgehalt der Sendeinformation (18) mit einer in der Sendeinformation (18) enthaltenen Anweisung ermittelt, wobei
- der zweite Teilnehmer (12; 32) die Anweisung auf Plausibilität/Ausführbarkeit prüft und eine von der Sendeinformation (18) verschiedene Bestätigungsinformation (24) in einem ersten vom ersten Teilnehmer (10; 30) auswertbaren Informationsformat nur dann erzeugt, wenn die Anweisung plausibel/ausführbar ist,
- die Bestätigungsinformation (24) in ein zweites vom ersten Teilnehmer (10; 30) auswertbares Informationsformat überführt wird,
- die Bestätigungsinformation (24) an den ersten Teilnehmer (10; 30) übermittelt wird,
- der erste Teilnehmer (10; 30) unter Verwendung der im letztgenannten Informationsformat vorliegenden Bestätigungsinformation (24) prüft, ob ein Informationsgehalt der Bestätigungsinformation (24) eindeutig dem Informationsgehalt der Sendeinformation (18) zugeordnet ist,
- der erste Teilnehmer (10; 30) eine Freigabeinformation (28) erzeugt), welche eine Freigabe/Berechtigung zum Ausführen der Anweisung umfasst, die Anweisung auszuführen, und
- die Freigabeinformation (28) an den zweiten Teilnehmer (12; 32) übermittelt wird, falls der Informationsgehalt der Bestätigungsinformation (24) eindeutig dem Informationsgehalt der Sendeinformation (18) zugeordnet ist.

2. Verfahren nach Anspruch 1,
wobei der erste Teilnehmer (10; 30) zum Erzeugen der Sendeinformation (18) aus einer ersten Listenstruktur (20) mit vorgegebenen Informationswerten einen Informationswert als Informationsbestandteil der Sendeinformation (18) wählt und/oder der zweite Teilnehmer (12; 32) zum Erzeugen der Bestätigungsinformation (24) aus einer zweiten Listenstruktur (26) mit vorgegebenen Informationswerten einen Informationswert als Informationsbestandteil der Bestätigungsinformation (24) wählt.

3. Verfahren nach einem der vorhergehenden Ansprüche,
wobei die Sendeinformation (18) einen Informationswert bezüglich eines vorgesehenen Empfängers umfasst und der zweite Teilnehmer (12; 32) einen Fehlerhinweis in die Bestätigungsinformation (24) aufnimmt, falls der zweite Teilnehmer (12; 32) vom vorgesehenen Empfänger verschieden ist.

4. Verfahren nach einem der vorhergehenden Ansprüche,
wobei der erste Teilnehmer (10; 30) eine Person ist, welche die Sendeinformation (18) in ein Kommunikationsgerät (34) eingibt, die Sendeinformation (18) mithilfe des Kommunikationsgeräts (34) an den zweiten Teilnehmer (12; 32) übermittelt und die Bestätigungsinformation (24) mithilfe des Kommunikationsgeräts (34) empfängt, oder dass der erste Teilnehmer (10; 30) eine Kommunikationsvorrichtung ist.

5. Verfahren nach einem der vorhergehenden Ansprüche,
wobei der zweite Teilnehmer (12; 32) eine andere Person ist, welche die Bestätigungsinformation (24) in ein anderes Kommunikationsgerät (38) eingibt, die Bestätigungsinformation (24) mithilfe des anderen Kommunikationsgeräts (38) an den ersten Teilnehmer (10; 30) übermittelt und die Sendeinformation (18) mittels des anderen Kommunikationsgeräts (38) empfängt, oder dass der zweite Teilnehmer (12; 32) eine andere Kommunikationsvorrichtung ist.

6. Verfahren nach einem der vorhergehenden Ansprüche,
wobei die Sendeinformation (18) visuell/akustisch ausgegeben wird und/oder die Bestätigungsinformation (24) visuell/akustisch ausgegeben wird.

7. System (14) zur gesicherten Kommunikation, aufweisend einen ersten als Kommunikationsvorrichtung ausgestalteten Teilnehmer (10) und einen zweiten als Kommunikationsvorrichtung ausgestalteten Teilnehmer (12),
- wobei der erste Teilnehmer (10) dazu eingerichtet ist, eine Sendeinformation (18) in einem ersten vom zweiten Teilnehmer (12) auswertbaren Informationsformat zu erzeugen, die Sendeinformation (18) in ein zweites vom zweiten Teilnehmer (12) auswertbares Informationsformat zu überführen sowie die Sendeinformation (18) im zweiten Informationsformat an den zweiten Teilnehmer (12) zu übermitteln,
wobei der zweite Teilnehmer (12) dazu eingerichtet ist,
- aus der im zweiten Informationsformat vorliegenden Sendeinformation (18) einen Informationsgehalt der Sendeinformation (18) mit einer in der Sendeinformation (18) enthaltenen Anweisung zu ermitteln,
- die Anweisung auf Plausibilität/Ausführbarkeit zu prüfen,
- eine von der Sendeinformation (18) verschiedene Bestätigungsinformation (24) in einem ersten vom ersten Teilnehmer (10) auswertbaren Informationsformat nur dann zu erzeugen, wenn die Anweisung plausibel/ausführbar ist,
- die Bestätigungsinformation (24) in ein zweites vom ersten Teilnehmer (10) auswertbares Informationsformat zu überführen
- sowie die Bestätigungsinformation (24) an den ersten Teilnehmer (10) zu übermitteln, und
der erste Teilnehmer (10) zudem dazu eingerichtet ist,
- unter Verwendung der im letztgenannten Informationsformat vorliegenden Bestätigungsinformation (24) zu prüfen, ob ein Informationsgehalt der Bestätigungsinformation (24) eindeutig dem Informationsgehalt der Sendeinformation (18) zugeordnet ist,
- eine Freigabeinformation (28) zu erzeugen, welche eine Freigabe/Berechtigung umfasst, die Anweisung auszuführen, und
- die Freigabeinformation (28) an den zweiten Teilnehmer (12) zu übermitteln, falls der Informationsgehalt der Bestätigungsinformation (24) eindeutig dem Informationsgehalt der Sendeinformation (18) zugeordnet ist.

## Claims

1. Method for secure communication between a first participant (10; 30) and a second participant (12; 32),
- in which the first participant (10; 30) generates an item of transmit information (18) in a first information format which can be assessed by the second participant (12; 32),
- the transmit information (18) is transferred into a second information format which can be assessed by the second participant (12; 32) and
- the transmit information (18) in the second information format is transmitted to the second participant (12; 32), wherein
- the second participant (12; 32) determines an information content of the transmit information (18) with an instruction contained in the transmit information (18) from the transmit information (18) present in the second information format, wherein
- the second participant (12; 32) checks the instruction for plausibility/executability and only then generates an item of confirmation information (24) which differs from the transmit information (18) in a first information format which can be assessed by the first participant (10; 30) if the instruction is plausible/can be executed,
- the confirmation information (24) is transferred into a second information format which can be assessed by the first participant (10; 30),
- the confirmation information (24) is transmitted to the first participant (10; 30),
- the first participant (10; 30) checks by using the confirmation information (24) present in the last-mentioned information format to determine whether an information content of the confirmation information (24) is assigned uniquely to the information content of the transmit information (18),
- the first participant (10; 30) generates an item of release information (28) comprising a release/authorisation for executing the instruction, in order to execute the instruction and
- the release information (28) is transmitted to the second participant (12; 32) if the information content of the confirmation information (24) is assigned uniquely to the information content of the transmit information (18).

2. Method according to claim 1,
wherein for the purpose of generating the transmit information (18) the first participant (10; 30) selects an information value from a first list structure (20) with predetermined information values as an information item of the transmit information (18) and/or for the purpose of generating the confirmation information (24), the second participant (12; 32) selects an information value from a second list structure (26) with predetermined information values as an information item of the confirmation information (24).

3. Method according to one of the preceding claims, wherein the transmit information (18) comprises an information value with respect to a provided recipient and the second participant (12; 32) receives an error notification in the confirmation information (24) if the second participant (12; 32) differs from the provided recipient.

4. Method according to one of the preceding claims, wherein the first participant (10; 30) is a person who enters the transmit information (18) into a communication device (34), transmits the transmit information (18) with the aid of the communication deice (34) to the second participant (12; 32) and receives the confirmation information (24) with the aid of the communication device (34), or that the first participant (10; 30) is a communication device.

5. Method according to one of the preceding claims,
wherein the second participant (12; 32) is another person, who enters the confirmation information (24) into another communication device (38), transmits the confirmation information (24) using the other communication device (38) to the first participant (10; 30) and receives the transmit information (18) by means of the other communication device (38), or that the second participant (12; 32) is another communication apparatus.

6. Method according to one of the preceding claims, wherein the transmit information (18) is output visually/acoustically and/or the confirmation information (24) is output visually/acoustically.

7. System (14) for secure communication, having a first participant (10) designed as a communication apparatus and a second participant (12) designed as a communication apparatus,
- wherein the first participant (10) is designed to generate an item of transmit information (18) in a first information format which can be assessed by the second participant (12), to transfer the transmit information (18) into a second information format which can be assessed by the second participant (12) and to transmit the transmit information (18) in the second information format to the second participant (12),
wherein
the second participant (12) is designed
- to determine an information content of the transmit information (18) with an instruction contained in the transmit information (18) from the transmit information (18) present in the second information format,
- to check the instruction for plausibility/executability,
- only then to generate an item of confirmation information (24) which differs from the transmit information (18) in a first information format which can be assessed by the first participant (10) if the instruction is plausible/can be executed,
- to transfer the confirmation information (24) into a second information format which can be assessed by the first participant (10)
- and to transmit the confirmation information (24) to the first participant (10), and
the first participant (10) is moreover designed,
- to check using the confirmation information (24) present in the last-mentioned information format to determine whether an information content of the confirmation information (24) is assigned uniquely to the information content of the transmit information (18),
- to generate an item of release information (28), which comprises a release/authorisation to execute the instruction, and
- to transmit the release information (28) to the second participant (12) if the information content of the confirmation information (24) is assigned uniquely to the information content of the transmit information (18).

## Revendications

1. Procédé de communication sécurisé entre un premier abonné (10 ; 30) et un deuxième abonné (12 ; 32),
- dans lequel le premier abonné (10 ; 30) produit une information (18) d'émission dans un premier format d'information exploitable par le deuxième abonné (12 ; 32),
- l'information (18) d'émission est transformée en un deuxième format d'information exploitable par le deuxième abonné (12 ; 32) et
- l'information (18) d'émission, dans le deuxième format d'information, est transmise au deuxième abonné (12 ; 32), dans lequel
- le deuxième abonné (12 ; 32) détermine, par une instruction contenue dans l'information (18) d'émission, à partir de l'information (18) d'émission présente dans le deuxième format d'information, un contenu informatif de l'information (18) d'émission, dans lequel
- le deuxième abonné (12 ; 32) contrôle la vraisemblance/la possibilité d'exécuter de l'instruction et ne produit, dans un premier format d'information exploitable par le premier abonné (10 ; 30), une information (24) de confirmation différente de l'information (18) d'émission que si l'instruction est vraisemblable/exécutable,
- l'information (24) de confirmation est transformée en un deuxième format d'information exploitable par le premier abonné (10 ; 30),
- l'information (24) de confirmation est transmise au premier abonné (10 ; 30),
- le premier abonné (10 ; 30) contrôle, en utilisant l'information (24) de confirmation présente dans le format d'information mentionné en dernier, si un contenu informatique de l'information (24) de confirmation est associé de manière univoque au contenu informatique de l'information (18) d'émission,
- le premier abonné (10 ; 30) produit une information (28) de validation, qui comprend une validation/autorisation d'exécuter l'instruction et
- l'information (28) de validation est transmise au deuxième abonné (12 ; 32) si le contenu informatif de l'information (24) de confirmation est associé de manière univoque au contenu informatique de l'information (18) d'émission.

2. Procédé suivant la revendication 1,
dans lequel
le premier abonné (10 ; 30) choisit, pour produire l'information (18) d'émission, dans une première structure (20) d'énumération à valeurs informatives données à l'avance, une valeur informative, comme constituant de l'information (18) d'émission et/ou le deuxième abonné (12 ; 32) choisit, pour produire l'information (24) de confirmation, dans une deuxième structure (26) d'énumération à valeurs informatives données à l'avance, une valeur informative, comme constituant de l'information (24) de confirmation.

3. Procédé suivant l'une des revendications précédentes,
dans lequel
l'information (18) d'émission comprend une valeur informative se rapportant à un récepteur prévu et le deuxième abonné (12 ; 32) reçoit une indication d'erreur dans l'information (24) de confirmation si le deuxième abonné (12 ; 32) est différent du récepteur prévu.

4. Procédé suivant l'une des revendications précédentes,
dans lequel
le premier abonné (10 ; 30) est une personne, qui entre l'information (18) d'émission dans un appareil (34) de communication, transmet l'information (18) d'émission à l'aide de l'appareil (34) de communication au deuxième abonné (12 ; 32) et reçoit l'information (24) de confirmation à l'aide de l'appareil (34) de communication ou en ce que le premier abonné (10 ; 30) est un dispositif de communication.

5. Procédé suivant l'une des revendications précédentes,
dans lequel
le deuxième abonné (12 ; 32) est une autre personne, qui entre l'information (24) de confirmation dans un autre appareil (38) de communication, transmet l'information (24) de confirmation au moyen de l'autre appareil (38) de communication au premier abonné (10 ; 30) et reçoit l'information (18) d'émission au moyen de l'autre appareil (38) de communication ou en ce que le deuxième abonné (12 ; 32) est un autre dispositif de communication.

6. Procédé suivant l'une des revendications précédentes,
dans lequel
l'information (18) d'émission est émise visuellement/acoustiquement et/ou l'information (24) de confirmation est émise visuellement/acoustiquement.

7. Système (14) de communication sécurisée, comportant un premier abonné (10), conformé en dispositif de communication et un deuxième abonné (12), conformé en dispositif de communication,
- dans lequel le premier abonné (10) est conçu pour produire une information (18) d'émission dans un premier format d'information exploitable par le deuxième abonné (12), pour transformer l'information (18) d'émission dans un deuxième format d'information exploitable par le deuxième abonné (12), ainsi que pour transmettre l'information (18) d'émission dans le deuxième format d'information au deuxième abonné (12),
dans lequel
le deuxième abonné (12) est conçu pour
- déterminer, à partir de l'information (18) d'émission présente dans le deuxième format d'information, un contenu informatif de l'information (18) d'émission, par une instruction contenue dans l'information (18) d'émission,
- contrôler la vraisemblance/la possibilité d'exécution de l'instruction,
- ne produire une information (24) de confirmation différente de l'information (18) d'émission, dans un premier format d'information exploitable par le premier abonné (10), que si l'instruction est plausible/exécutable,
- transformer l'information (24) de confirmation dans un deuxième format d'information exploitable par le premier abonné (10),
- ainsi que transmettre l'information (24) de confirmation au premier abonné (12) et
le premier abonné (10) est conçu, en outre, pour
- contrôler, en utilisant l'information (24) de confirmation présente dans le format d'information mentionné en dernier, si un contenu informatif de l'information (24) de confirmation est associé de manière univoque au contenu informatique de l'information (18) d'émission,
- produire une information (28) de validation, qui comprend une validation/autorisation d'exécuter l'instruction et
- transmettre l'information (28) de validation au deuxième abonné (12), si le contenu informatif de l'information (24) de confirmation est associé de manière univoque au contenu informatique de l'information (18) d'émission.
